Europäisches Patentamt

European Patent Office

Office européen des brevets

(11) Publication number: **0 040 186**

**B1**

(12) **EUROPEAN PATENT SPECIFICATION**

(45) Date of publication of patent specification: **02.01.85**

(51) Int. Cl.⁴: **B 01 L 11/00, G 01 N 35/00**

(21) Application number: **81850074.6**

(22) Date of filing: **23.04.81**

(54) A plate and a frame therefor.

(30) Priority: **23.04.80 SE 8003088**

(43) Date of publication of application:
**18.11.81 Bulletin 81/46**

(45) Publication of the grant of the patent:
**02.01.85 Bulletin 85/01**

(84) Designated Contracting States:
**CH DE FR GB IT LI**

(56) References cited:
**DE-A-2 528 152**
**DE-A-2 623 712**
**GB-A-1 376 219**
**US-A-3 327 204**
**US-A-3 623 166**
**US-A-3 704 394**
**US-A-3 723 823**

(73) Proprietor: **Instrument AB Scanditronix**
**Box 3011**
**S-183 03 Täby (SE)**

(72) Inventor: **Längström, Bengt**
**Falkvägen 17**
**S-752 56 Uppsala (SE)**

(74) Representative: **Svanfeldt, Hans-Ake et al**
**DR. LUDWIG BRANN PATENTBYRA AB Box 1344**
**Drottninggatan 7**
**S-751 43 Uppsala (SE)**

Courier Press, Leamington Spa, England.

## Description

The present invention refers to a plate and a frame for a number of such plates. More particularly, the invention refers to a plate which is provided with laboratory equipment intended to be used in chemical reactions. By laboratory equipment is meant components of chemical nature, such as bottles, test tubes etc., as well as components of mechanical and/or electrical nature, such as, for example, magnetic valves, ovens, thermistors etc. The frame according to the invention is intended to hold a number of said plates in a sequence behind each other and includes connections for fluid and electrical flows which are intended to enter into engagement with complementary connections provided on the plates. The connections of one plate are in connection, either communicating connection or electrical connection, with the laboratory equipment of the plate considered. The connections of the frame are via hoses and electrical wires in connection with external sources, such as, for example, gas tubes, electrical supply assemblies etc., but may also be mutually connected with each other by means of hoses and/or electrical wires.

The basic idea of the invention is that a laboratory is equipped with a "library" of plates and a frame. The chemist selects the plate or plates which are provided with the laboratory equipment necessary for the performance of the chemical reaction and pushes the plates behind each other into grooves provided in the frame. After coupling connections for fluid and electrical flow provided on the plates with complementary connections provided on the frame the chemist carries out the connections which are required between external sources and the frame and between connection members of the frame itself. In an embodiment of the invention said coupling takes place at the termination of the push-in movement of a plate into the frame. After all couplings being completed the reaction is carried out.

The plates according to the invention can be compared with conventional printed-circuit cards for electronic equipment, more particularly printed-circuit cards of the kind which are provided with so-called card contacts and which are put into so-called racks in the back wall of which complementary contacts are provided.

DE—A—2 623 712 relates to a chemical analysis apparatus housed in a cabinet. Laboratory equipment are installed on plates which by means of hinges are mounted within the cabinet. The laboratory equipment of the plates are directly connected to the respective analysis apparatuses, liquid sources and other equipments provided in the cabinet.

US—A—3 623 166 is directed to a portable utility unit, for example a complete laboratory table with Bunsen burners, a sink basin and electrical sockets, provided with a mounting panel having connection means for fluids and electricity. Said mounting panel is adapted for connection with a stationary or permanent mounting panel housed in a box which is provided with complementary connection means for fluids and electricity. The box is permanently installed in the floor or in the wall of a building.

Among the great technical advantages of the plate and the frame, respectively, according to the invention one is that the time consumption for coupling and performing a chemical reaction is considerably reduced compared to the conventional way of coupling and performing the reaction by means of equipment which is placed in individual holders on a table top. The gain of time can be attributed to the fact that all connections for fluid and electrical flows are located on the frame which affords a good general view of the actual coupling. Experiments carried out of the kind described more closely below show that about 3 to 5 times as many reactions can be accomplished per hour if the plate and the frame according to the invention are used compared to the use of conventional technique for coupling the laboratory equipment.

The gain of time mentioned above can advantageously, when carrying out chemical reactions, be utilized in synthetizing starting materials and biologically interesting molecules built therefrom and marked with positron-emitting radionuclides, more particularly $^{11}C$. The advantage of using $^{11}C$ for studying biologically interesting molecules is its short half-life (about 20 minutes), that it gives off a low radiation dose and that its radiation can be detected outside the body. A problem which is associated with the use of $^{11}C$ is that its short half-life makes it difficult to have time in the conventional way to carry out a desired synthesis before all the radio-activity has decayed. However, if one can bring about a system of synthetizing $^{11}C$-marked molecules within about 1 hour they could really be utilized at a large scale and with great utility in the biomedical basic research and for clinical use.

The frame and plate arrangement according to the invention offers such a system for synthetizing $^{11}C$-marked molecules, which system, in addition to eliminating the problem of the great time consumption in accomplishing the syntheses in the conventional way, is compact, shows great flexibility, renders good reproduceability and can have good radiation protection. Accordingly, by selecting the plate or plates which are provided with the laboratory equipment required for carrying out the chemical syntheses considered, the operator may carry out the desired synthesis by means of the frame and plate system according to the invention in a safe way under external manipulation. In this way it has been possible to produce $^{11}C$-methyl iodide, $^{11}C$-formaldehyde, $^{11}C$-hydrogen cyanide, $^{11}C$-acetic acid starting from $^{11}CO_2$ and $^{11}C$-hydrogen cyanide starting from $^{11}C$-

methane in a frame shielded by 5 cm of lead and in the shape of a box having the outside dimensions 50 × 40 × 30 cm. The connections mentioned above are of the type which produces the desired connection as a consequence of a substantially rectilinear slip-in movement. When it is a matter of producing a fluid connection the connections preferably are a hose coupling in the form of a quick-coupling, for example a quick-coupling of the Swagelock-type. When it is a matter of producing an electric connection the connections are in the form of conventional plug-in contacts, for example card contacts.

Various embodiments of the invention will be described more closely below in connection with the attached drawing, in which

Fig. 1 shows a perspective view of a frame according to the invention,

Fig. 2 shows a plan view of a plate according to the invention, said plate being provided with certain laboratory equipment,

Fig. 3 is a plan view of another plate according to the invention provided with different laboratory equipment,

Fig. 4 is a plan view of a coupling plate associated with the frame according to Fig. 1,

Fig. 5 is a lateral view of another coupling plate according to the invention, said view showing various types of connection members,

Fig. 6 is a perspective view of another embodiment of a frame according to the invention, said frame having a lateral wall which in addition serves as a coupling plate.

Fig. 7 shows a perspective view of another embodiment of a frame according to the invention, and

Fig. 8 is a plan view of another embodiment of the plate according to the invention.

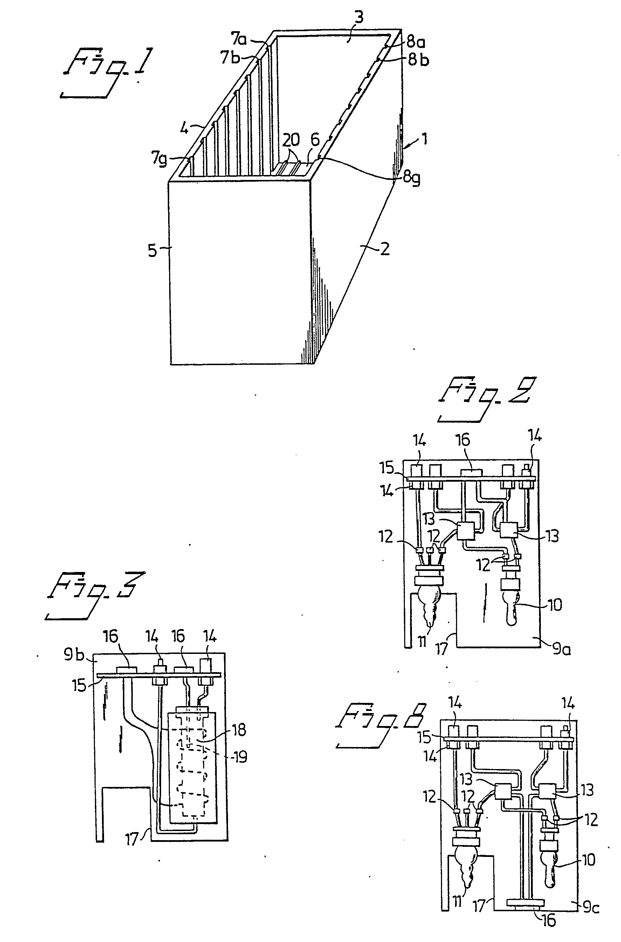

Fig. 1 shows a frame, a so called rack 1 which includes a box-like structure having lateral walls 2 to 5 and a bottom wall 6. The structure is open at the top. Grooves 7a to 7e are provided in the lateral wall 2 equally spaced and running vertically. In the same way grooves 8a to 8e are provided in the lateral wall 4. The groove 7a is located opposite the groove 8a, 7b opposite 8b etc. to form pairs of guide grooves lying behind each other for receiving a plate described more closely below.

Fig. 2 shows a front view of a plate 9a according to the invention. The plate is rectangular and can be pushed in between any of the abovementioned pairs of grooves. The plate has fixed to it two bottles 10 and 11 each of which has a number of connections 12. By means of tubings, for example of plastic, and multi-way valves 13 the connections 12 are branched or connected among themselves, respectively, between the two bottles. Certain connections are taken direct to an adaptor 14. The branchings are also by means of tubings taken to other adaptors 14. All the adaptors 14 are fixed to a holder 15 provided adjacent one edge of the plate. This holder may consist of a strip fixed at the top edge of the plate or may be made integral with the plate 9a. The adaptors 14 preferably are of a quick-coupling type. Female-type contacts are chosen for input tubings, while male-type contacts are chosen for output tubings, whereby the risk of miscouplings is eliminated to a certain extent. The multi-way valves 13 are electrically manipulated, and the electric wires to the valves are taken to adaptors 16 which are fixed to the holder 15. The adaptors 16 are in the form of electric contacts which are of a plug-in type, for example female contacts. The plate 9a is provided with a cut-out portion 17 the purpose of which is described more particularly below.

The material of the plate and the material of the frame is not critical. Preferably a material is chosen which is inert with regard to the chemical reactions to be accomplished. The material should be stiff and easy to work. It may be an advantage if the material is transparent. As examples of suitable materials PVC, plexiglass, glass fibre, board etc. may be mentioned.

Fig. 3 shows a plate 9b which is provided with other laboratory equipment than that shown in Fig. 2. An electric oven 18 is fixed to the plate by conventional fixing means, not shown. Inlet and outlet for the oven takes place by tubings which are taken to adaptors 14 which are constructed in the same way as those shown in Fig. 2. Electric wires to a thermocouple 19 disposed in the oven are taken to adaptors 16 which are similar to those shown in Fig. 2. The adaptors 14 and 16 are located on a holder 15 corresponding to that shown in Fig. 2. The plate 9b is also provided with a cut-out portion 17.

The plate 19a is pushed into the pair of grooves 7a, 8a, while the plate 9b is pushed into the pair 7b, 9b. The cut-outs 17 in the plates 9a, b permits that a carriage not shown can be moved between the plates 9a, b placed behind each other in the frame. The carriage runs on rails 20 shown in Fig. 1 and arranged on the bottom wall 6. The carriage is used, for example, for taking out samples from laboratory equipment on a plate and transporting the sample to laboratory equipment on a different plate provided in the same frame.

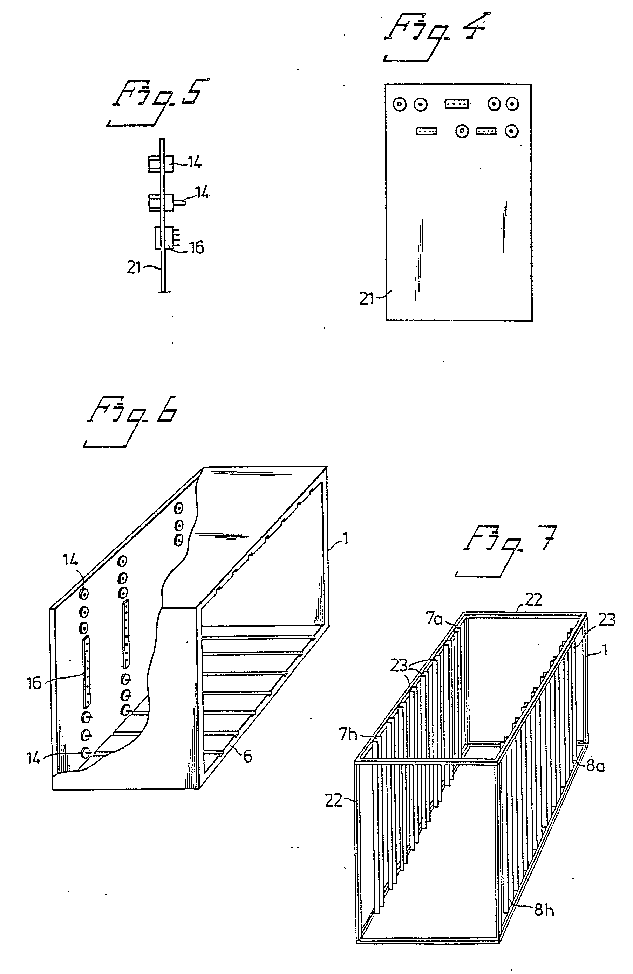

Fig. 4 shows a wall or coupling plate 21 which is provided with connection members (14′, 16′) which are complementary to the adaptors provided on the plates 9a, 9b and are located in positions lying opposite the corresponding adaptors of the plates. The wall or coupling plate 21 is either a loose separate unit or a unit pivotally mounted on the frame 1. Fig. 4 shows the connection members provided on the wall of coupling plate 21 in the case where the plates 9a and 9b are pushed into the grooves 7a, 8a and 7b, 8b, respectively, in the frame of Fig. 1. Fig. 4 shows the side of the coupling plate facing the plates 9a, 9b pushed into the frame. The wall or coupling plate 21 is placed as a cover over the open top of the frame 1 and is pressed on so that the connection members thereof as shown in Fig. 4 will engage the adaptors 14, 16 of the plates 9a, b. Connections of external equipment that may be required, such as gas sources, current sources, printers, control equipment, monitoring equipment, are then performed by connecting hoses, electric wires etc. to the connection members of the wall or coupling plate 21. Laboratory equipment on one plate can be connected with laboratory equipment on another plate provided in the frame or on plates which are provided in another frame placed in connection with the frame shown in Fig. 1.

The invention has been described above in connection with plates where the adaptors are located at the top edge of the plate, but it is understood that they may be located at other edges of the plate, for example at its bottom edge or at one of the lateral edges of the plate. According to the invention it is also possible to locate the adaptors for hoses at one of the edges of the plate, while adaptors for electric wires are located at another edge of the plate, preferably the opposite edge. Also, the plates need not be pushed vertically into the frame but may be pushed in from one side as is exemplified in Fig. 6 which shows a frame one lateral wall of which is provided with connection members 14', 16' and serves as a coupling plate 21. These connection members 14', 16' are complementary to the adaptors (14, 16) on the plates. The top wall of the frame and the bottom wall thereof are provided with parallel, opposite grooves corresponding to the grooves 7, 8 shown in Fig. 1.

From Figs. 2 and 3 it is seen that the adaptors 14 and 16 are mixed without any mutual order. This may be a source of miscouplings. Therefore, it is within the scope of the present invention that the electric contacts on one hand and the hose couplings on the other hand are located in predetermined areas of the holder 15. For example, the electric contacts 16 may be located in an area in the middle of one edge of the plate while hose couplings of the female type are located at one side of the electric contacts 16 and male-type hose couplings are located at the opposite side of the electric contacts 16. The wall of coupling plate 21 will then get a uniform appearance as is seen from, for example, Fig. 6 where female-type quick-couplings are located at the top, the electric contacts 16' are located in the middle of, and the male-type hose couplings are located at the bottom of the lateral wall of the box-like structure.

Fig. 7 shows still another embodiment of a frame 1 in the form of a box skeleton, i.e. the box is without lateral, bottom and top walls and is instead formed by rods 22 fixed, for example soldered, to each other. Strips 23, which are substantially of U-shape in cross-section, are fixed, for example soldered, in pairs between opposite pairs of rods to form grooves corresponding to the grooves 7a to h and 8a to h.

Fig. 5, in cross-section, shows a wall or coupling plate 21 having in turn, counted from above, a female-type hose coupling, a male-type hose coupling and a male-type electric contact. The connection of the connection members to the plates takes place at the righthand side of the connection members, as seen in Fig. 5, while connections to external sources are accomplished at the left-hand side of the connection members shown in Fig. 5.

Finally, Fig. 8 shows a plate 9c on which the adaptors 14 for hoses have been located at the top on the edge of the plate, while the adaptors 16 for electric wires have been located at the opposite bottom edge of the plate. The electrical adaptors may then be directly fixed to the plate, for example by soldering, screwing etc. or alternatively they may, similarly as the connection members, be fixed to a strip. It is understood that the plate 9c is used together with a frame the bottom wall of which is provided with complementary electric connection members located right under the connection members 16' while the wall or coupling plate 21 has connections only for hoses. This helps to making the coupling plate more clear.

Similarly, the electric connection members 16' shown in the frame of Fig. 6 may be located on a separate, additional wall coupling plate, not shown, which after a suitable number of plates being pushed into the grooves of the frame closes the opening of the frame.

The frames shown in Figs. 1, 6 and 7 may, in the case of performing chemical reactions with radioactive materials, be lined with lead plates and plates of lead glass. A video camera may be placed in the frame so that the chemist may supervise the course of reaction visually.

The feature of the rails 20 and the cut-outs 17 in the plates 9 may be omitted.

**Claims**

1. A plate (9a, b) for releasable mounting within the frame (1) of claim 3, said plate having laboratory equipment (10—13, 18, 19) permanently fixed to at least one face thereof, said equipment comprising chemical reaction apparatus having connections for fluid and electrical flow, said connections being connected to complementary fluid flow adaptors (14) and electrical adaptors (16) fixedly mounted at least at one edge region of said plate for releasable connection, during use, with complementary connections provided by said frame (1).

2. A plate according to claim 1, characterized by a holder (15) extending adjacent said edge, the adaptors (14, 16) being fixed to said holder.

3. A frame (1) for releasably receiving at least one of said plates (9a, b) of claim 1, said frame comprising spaced grooves (7, 8) for releasably mounting a respective one of said plates, the frame including fluid flow (14') and electrical connections (16') for connecting the adaptors (14, 16) of said plates (9a, b) in use to external fluid flow and electrical lines.

4. A frame according to claim 3, characterized by the fact that the frame includes a first wall (21) provided with said fluid flow connections (14') for conduits and a second wall (21) provided with said electrical connections (16') for electric wires.

5. A frame according to claim 3, characterized by the fact that said frame connections (14', 16') are provided either on a wall (21) forming a cover for the frame, with the grooves (7, 8) running vertically or on a lateral wall (21), in which case said grooves run horizontally, and that the frame is in the form of a box.

6. A frame according to claim 3, characterized by the fact that it consists of a box-like skeleton (22) and that the grooves (7, 8) consist of strips (23) substantially U-shaped in cross-section and mounted in the skeleton.

7. A frame according to claim 4, wherein said first and second walls (21) are either opposed lateral walls or a cover wall and an opposed bottom wall.

8. A frame according to any one of claims 3 to 7, characterized by the fact that plates of lead and/or lead glass surround the frame.

**Revendications**

1. Plaque (9a, b) pour montage libérable dans le châssis (1) suivant la revendication 3, cette plaque portant un équipement de laboratoire (10—13, 18, 19) fixé de façon permanente à au moins une de ses faces, cet équipement comprenant un appareil pour réaction chimique qui comporte des raccordements pour des circuits électriques et de fluides, ces raccordements étant reliés à des raccords de fluide (14) et à des raccords électriques (16) complémentaires, montés de façon fixe au moins à un bord de la plaque, pour la jonction libérable avec des raccords complémentaires prévus sur le châssis (1), pendant l'utilisation.

2. Plaque suivant la revendication 1, caractérisée par une monture (15) s'étendant près du dit bord, les raccords (14, 16) étant fixés à cette monture.

3. Châssis (1) pour recevoir de façon libérable au moins une des plaques (9a, b) suivant la revendication 1, ce châssis comprenant des gorges espacées (7, 8) pour le montage libérable d'une plaque respective, le châssis comprenant des raccords de fluide (14') et électriques (16') pour relier les raccords (14, 16) des plaques (9a, b) à des canalisations extérieures électriques et de fluides, en fonctionnement.

4. Châssis suivant la revendication 3, caractérisé en ce que le châssis comprend une première paroi (21) comportant les dits raccords de fluide (14') pour des tuyauteries, et une deuxième paroi (21) comportant les dits raccords électriques (16') pour des conducteurs électriques.

5. Châssis suivant la revendication 3, caractérisé en ce que les raccords (14', 16') du châssis sont prévus sur une paroi (21) constituant un couvercle pour le châssis, les gorges (7, 8) étant disposées verticalement, our sur une paroi latérale (21), les gorges étant dans ce cas disposées horizontalement, et en ce que le châssis est sous la forme d'une boîte.

6. Châssis suivant la revendication 3, caractérisé en ce qu'il est constitué d'un squelette (22) en forme de boîte et en ce que des gorges (7, 8) sont constituées par des bandes (23) à section transversale sensiblement en U, montées dans le squelette.

7. Châssis suivant la revendication 4, dans lequel les première et deuxième parois (21) sont des parois latérales opposées, ou bien une paroi de couvercle et une paroi inférieure opposée.

8. Châssis suivant l'une quelconque des revendications 3 à 7, caractérisé en ce que des plaques de plomb et/ou de verre au plomb entourent le châssis.

**Patentansprüche**

1. Trägerplatte (9a, b) zum lösbaren Einsetzen in das Rahmengestell (1) gemäß Anspruch 3, dadurch gekennzeichnet, daß auf mindestens einer Seite der Trägerplatte Laborgeräte (10—13, 18, 19) dauerhaft befestigt sind, die mit Verbindungsleitungen für Flüssigkeiten oder Gase und elektrischen Strom versehene Einrichtungen für chemische Reaktionen aufweisen, wobei die Leitungen an Rohr- oder Schlauchkupplungen (14) und an elektrische Kupplungen (16) angeschlossen sind, die mindestens an einer Kante der Trägerplatte für lösbare Verbindungen mit am Rahmengestell (1) vorgesehenen komplementären Kupplungen angeordnet sind.

2. Trägerplatte nach Anspruch 1, gekennzeichnet durch eine die Kupplungen (14, 16) tragende sich längs der Kante erstreckende Halterung (15).

3. Rahmengestell (1) zum lösbaren Einsetzen mindestens einer Trägerplatte (9a, b) gemäß Anspruch 1, gekennzeichnet durch im Abstand voneinander angeordneten Nuten (7, 8) zum lösbaren Einsetzen der Trägerplatten, wobei am Rahmengestell Rohr- oder Schlauchkupplungen (14') und elektrische Kupplungen (16') zum Anschließen der Kupplungen (14, 16) an die Trägerplatten (9a, b) an entsprechende äußere Leitungen vorgesehen sind.

4. Rahmengestell nach Anspruch 3, gekennzeichnet durch eine erste, mit den Rohr- oder Schlauchkupplungen (14') versehene Wand (21) und durch eine zweite, mit den elektrischen Kupplungen (16') versehene Wand (21) für elektrische Leitungen.

5. Rahmengestell nach Anspruch 3, dadurch gekennzeichnet, daß die Rahmenkupplungen (14', 16') entweder an einer, eine Abdeckung für den Rahmen bildende Wand (21) mit senkrecht verlaufenden Nuten (7, 8) oder an einer Seitenwand (21) mit horizontalen Nuten vorgesehen sind, wobei das Rahmengestell einen Kasten bildet.

6. Rahmengestell nach Anspruch 3, gekennzeichnet durch ein kastenförmiges Gerüst (22), wobei die Nuten (7, 8) durch im Querschnitt im wesentlichen U-förmige am Gerüst befestigte Schienen (23) gebildet sind.

7. Rahmengestell nach Anspruch 4, dadurch gekennzeichnet, daß die erste und zweite Wand (21) entweder einander gegenüberliegende Seitenwände oder einander gegenüberliegende Deck- und Bodenwände sind.

8. Rahmengestell nach einem der Ansprüche 1 bis 7, dadurch gekennzeichnet, daß Platten aus Blei und/oder aus Bleiglas das Rahmengestell umgeben.

Fig. 1

Fig. 2

Fig. 3

Fig. 8

_Fig. 4_

_Fig. 5_

_Fig. 6_

_Fig. 7_